# EUROPÄISCHE PATENTSCHRIFT

(11) **EP 3 759 774 B1**
(45) Veröffentlichungstag und Bekanntmachung des Hinweises auf die Patenterteilung: **09.02.2022**
(21) Anmeldenummer: 19805649.1
(22) Anmeldetag: 18.11.2019
(51) Int. Cl.: H01T 1/14, H01T 2/02, H01T 4/14

(54) **ÜBERSPANNUNGSSCHUTZANORDNUNG MIT EINER IN EINEM GEHÄUSE BEFINDLICHEN HÖRNERFUNKENSTRECKE MIT KAMMER ZUR LICHTBOGENLÖSCHUNG**
OVERVOLTAGE PROTECTION ARRANGEMENT WITH A HORN SPARK GAP, LOCATED IN A HOUSING, WITH A CHAMBER FOR ARC QUENCHING
DISPOSITIF DE PROTECTION DE SURTENSION DOTÉ D'UN ÉCLATEUR À CORNES À CHAMBRE POUR EXTINCTION D'ARC, SITUÉ DANS UN BOÎTIER

(30) Priorität: 17.01.2019 DE 102019101212
(43) Veröffentlichungstag der Anmeldung: 06.01.2021
(73) Patentinhaber: DEHN SE + Co KG, 92318 Neumarkt / Opf. (DE)
(72) Erfinder: EHRHARDT, Arnd, 92318 Neumarkt (DE); BROCKE, Ralph, 98693 Ilmenau/Oberpörlitz (DE); ZAHLMANN, Peter, 92318 Neumarkt (DE)
(74) Vertreter: Isarpatent
(86) Internationale Anmeldenummer: PCT/EP2019/081586
(87) Internationale Veröffentlichungsnummer: WO 2020/148000

(56) Entgegenhaltungen:
- DE-A1-102011 051 738
- DE-A1-102011 102 257
- DE-A1-102013 112 400

## Beschreibung

Die Erfindung betrifft eine Überspannungsschutzanordnung, umfassend eine in einem Gehäuse befindliche Hörnerfunkenstrecke mit Kammer zur Lichtbogenlöschung, wobei im Zündbereich der Hörnerfunkenstrecke eine Triggerelektrode befindlich ist gemäß Oberbegriff des Anspruches 1.

Hörnerfunkenstrecken mit Deionkammer zur Lichtbogenlöschung sind beispielsweise aus der DE 10 2011 051 738 A1 vorbekannt. Eine diesbezügliche Hörnerfunkenstrecke befindet sich in einem Gehäuse und weist Mittel zur Steuerung der internen Gasströmung zur Einstellung eines unterschiedlichen Verhaltens des bei einer Impulsstrombelastung entstehenden Lichtbogens einerseits sowie des netzfolgestrombedingten Lichtbogens andererseits auf.

Bei einer bekannten Hörnerfunkenstrecke ist im Zündbereich eine Triggerelektrode anordenbar. Diese Triggerelektrode kann ein leitfähiges Element umfassen, welches von einer Gleitstrecke umgeben ist. Ebenso können benachbarte Gleitstrecken aus einem isolierenden oder halbleitenden Material bestehen. Die bekannte Triggerelektrode ist entweder an einer der beiden Elektroden im Zündbereich eingesetzt oder zwischen den beiden Elektroden der Hörnerfunkenstrecke, bevorzugt im unteren Bereich des Zündbereiches, angeordnet.

Die DE 195 45 505 C1 zeigt einen Überspannungsableiter mit mindestens einem spannungsabhängigen Widerstand, zum Beispiel einem Varistor und thermischen Abschaltvorrichtungen.

Diese Abschaltvorrichtungen bestehen einerseits aus einem Sicherungsstreifen sowie andererseits aus einer Thermoauslösung mit eutektischer Schmelzlegierung.

Mit dem Auftrennen des Sicherungsstreifens oder der Thermosicherung wird mit Hilfe einer Federkraft ein Schadensanzeiger betätigt. Ein Schadensfall ist damit sichtbar. Um sowohl im Falle eines durch Alterung entstehenden unzulässigen Leckstromes des Varistors als auch im Falle eines zu hohen, einen Kurzschluss im Varistor erzeugenden Stoßstromes mit einfachen Mitteln in raumsparender Bauweise für eine Anzeige des eingetretenen Fehlerfalles zu sorgen, ist ein Gehäuse vorgesehen, in dem sich ein stoßstromfester Sicherungsstreifen befindet. Der Schadensanzeiger ist ein gesondertes, am Gehäuse lösbar befestigter und nach Lösung einer Feder relativ zum Sicherungsgehäuse bewegbares Bauteil.

Aus der DE 10 2014 215 282 B3 ist ein kombiniertes Überspannungsschutzgerät mit einer integrierten Funkenstrecke vorbekannt. Die Funkenstrecke weist eine in Reihe geschaltete Schmelzsicherung auf, wobei die Reihenschaltung an ein Versorgungsnetz mit einem ersten Potential und einem hiervon verschiedenen zweiten Potential anschließbar ist. Die Funkenstrecke weist zwei Hauptelektroden auf, die sich in einem Gehäuse befinden.

Der dortige Schmelzleiter verbindet einen ersten Anschluss mit der zweiten Hauptelektrode der Funkenstrecke, wobei die Schmelzsicherung weiterhin einen weiteren Kontakt aufweist, wobei der weitere Kontakt isoliert zum ersten Kontakt und isoliert zur zweiten Hauptelektrode der Funkenstrecke angeordnet ist. Das Überspannungsschutzgerät weist darüber hinaus einen Plasmakanal auf, der aus dem Brennraum der Funkenstrecke so in die Nachbarschaft des Schmelzleiters führt, dass Plasma auf den Schmelzdraht gezielt degradierend einwirken kann. Infolgedessen kann der Schmelzdraht einer Zerstörung unterliegen.

Ausgehend vom geschilderten Stand der Technik ist es Aufgabe der Erfindung, eine weiterentwickelte Überspannungsschutzanordnung, umfassend eine in einem Gehäuse befindliche Hörnerfunkenstrecke mit Kammer zur Lichtbogenlöschung anzugeben, wobei eine vorhandene Triggerung definiert bei Überlastung der Funkenstrecke abschaltbar ist, und zwar ohne dass die Funkenstrecke bei einer nachfolgenden Aktivierung Fehlfunktionen zeigt. Dabei soll das Abtrennen der Triggerschaltung bevorzugt auf eine vom normalen Verhalten der Funkenstrecke abweichende Belastung mit Netzfolgestrom ausgerichtet werden.

Die Lösung der Aufgabe der Erfindung erfolgt mit der Merkmalskombination nach Anspruch 1, wobei die Unteransprüche mindestens zweckmäßige Ausgestaltungen und Weiterbildungen umfassen.

Ausgehend von der an sich bekannten Überspannungsschutzanordnung bestehend aus einer in einem Gehäuse befindlichen Hörnerfunkenstrecke mit Kammer zur Lichtbogenlöschung und im Zündbereich befindlicher Triggerelektrode ist eine spezielle Abtrennvorrichtung vorhanden. Die Abtrennvorrichtung wird durch eine Bewertungseinheit betätigt. Diese Bewertungseinheit erfasst und bewertet die Belastung der Überspannungsschutzeinrichtung bei einem Netzfolgestrom. Die Bewertungseinheit kann beispielsweise als Schmelzeiter ausgeführt sein. Der Schmelzleiter befindet sich bei einer bevorzugten Ausführungsform im Bereich der Kammer oder ist mit dieser verbunden und ist dort einer netzfolgestrombedingten Belastung ausgesetzt.

Der Schmelzleiter hält ein, bevorzugt federkraftunterstütztes, Abtrennelement in einer ersten Position. Der Schmelzleiter gibt das Abtrennelement bei Schmelzen frei derart, dass das Abtrennelement eine zweite Position einnimmt, wobei mit dem Erreichen der zweiten Position eine elektrische Verbindung zur Triggerelektrode unterbrochen und somit die Triggerelektrode abgetrennt wird.

Ein erfindungsgemäßer Gedanke besteht also darin, einen Schmelzleiterdraht mit definiertem Schmelzintegralwert einzusetzen, um die Belastung einer Funkenstrecke, welche einen Lichtbogenlaufbereich und eine Löschkammer zur Lichtbogenlöschung aufweist, zu bewerten.

Mit dem Erreichen eines Grenzwertes schmilzt der Schmelzleiter und löst die erwähnte Abtrennvorrichtung aus, die die Triggerschaltung der Funkenstrecke deaktiviert und gegebenenfalls gleichzeitig eine Anzeige betätigt.

Der vorerwähnte Grenzwert kann durch die Drahteigenschaften, die Art der Kontaktierung und die Positionierung des Schmelzleiters innerhalb der Funkenstrecke bestimmt werden. Hierdurch ist eine sehr genaue Abstimmung auf die Höhe und die Art der Belastung der Funkenstrecke möglich. Der Grenzwert soll sich bevorzugt auf die Belastung durch einen Netzfolgestrom beziehen.

Das Schmelzen des drahtförmigen Schmelzleiters wird beispielsweise durch eine Strombelastung, eine thermische Belastung oder aber auch den Lichtbogenabbrand bewirkt. In einer Ausführungsform der Erfindung kann der Schmelzleiter zusätzlich thermosensibel fixiert werden.

Bei einer Ausgestaltung der Erfindung kann die Triggerelektrode über ein spannungsbegrenzendes oder spannungsschaltendes Element mit einer der Hauptelektroden der Hörnerfunkenstrecke in Verbindung stehen und diese Verbindung mittels des Abtrennelementes unterbrochen werden.

Gemäß einer Ausführungsform der Erfindung ist der Schmelzleiter in der Löschkammer beispielsweise mit beabstandeten Löschblechen einer Deionkammer kontaktiert.

Der Schmelzleiter kann jedoch auch bereits im Einlaufbereich zur Löschkammer angeordnet werden. Insbesondere kann der Schmelzleiter bzw. die Bewertungseinheit sich im Lichtbogenlaufbereich des Folgelichtstrombogens in der Hörnerfunkenstrecke befinden oder mit diesem verbunden sein.

Das Abtrennelement ist von einem Schmelzleiter ebenso auslösbar, welcher sich oberhalb eines Zündbereiches der Hörnerfunkenstrecke in einem dort vorhandenen Volumen befindet.

Der Schmelzleiter kann aber auch an einer der Laufschienen bzw. Hörnerelektroden der Funkenstrecke angeschlossen werden.

Bei einer Ausgestaltung der Erfindung ist das Abtrennelement seitlich, neben der Deionkammer angeordnet und als beispielsweise Schieber ausgebildet.

Das Abtrennelement kann aber auch weitgehend innerhalb der Löschkammer angeordnet werden. Als Löschkammern zur Folgestromlöschung können Isolierstegkammern, Mäanderkammern, bzw. bevorzugt Deionkammern verwendet werden. Die Einbringung eines Elementes zur Abtrennung der Triggerschaltung ist bei allen Löschkammern in ähnlicher Weise möglich. Der beispielhaft nutzbare Schmelzleiter zur Detektion und Bewertung eines Folgestromes kann in jeder Löschkammer direkt dem Lichtbogen oder auch nur einem Stromfluss infolge einer Differenzspannung in der Kammer ausgesetzt werden. Ebenso kann die Erwärmung der Schaltkammer infolge einer umgesetzten Schaltleistung für eine thermosensible Auslösung genutzt werden. Die nicht einschränkenden Erläuterungen erfolgen im Weiteren am Beispiel einer häufig genutzten Deionkammer, jedoch ist die Nutzung der Grundanordnungen ohne weiteres auf beliebige Löschkammern übertragbar.

Bei einer Weiterbildung der Erfindung ist der Schmelzleiter potentialfrei im Lichtbogenlaufbereich oder der Deionkammer angeordnet.

Bei teilweiser Führung des Schmelzleiters außerhalb der Deionkammer zum Aktivieren des Abtrennelementes können Einströmöffnungen oder Einströmkanäle für ein bei einer externen Lichtbogenbildung entstehendes Plasma ausgebildet werden.

Mit der vorgestellten Lösung wird eine Abtrennung der Triggerschaltung von der Hörnerfunkenstrecke mit Lösch- oder Deionkammer so erreicht, dass die Funkenstrecke nach der Abtrennung noch nicht irreversibel geschädigt ist.

Erfolgt die Abtrennung der Triggerschaltung zeitversetzt aufgrund der mechanischen Bewegung des Abtrennelementes und der damit verbundenen Verzugszeit, ist sichergestellt, dass auch eine nachfolgende Aktivierung der Funkenstrecke nicht zu einer Fehlfunktion oder Überlastung führt.

Durch die erfindungsgemäße Abtrennung der Triggerschaltung und die Ausbildung der Funkenstrecke im Zündbereich ist gewährleistet, dass die Ansprechspannung der dann quasi passiven Funkenstrecke mindestens der Höhe der im Anwendungsumfeld üblichen Impuls- und Stehspannungsfestigkeit entspricht. Hier können insbesondere die Luft- und Kriechstrecken unter Beachtung des Verschleißes der Funkenstrecke bis zum Ansprechen der Schutzeinrichtung zur Auslegung herangezogen werden.

Unter Abtrennung im Sinne der Anmeldung ist zu verstehen, dass die im Anwendungsumfeld üblichen Impuls- und Stehspannungsfestigkeiten realisiert werden. Dies betrifft selbstverständlich nicht nur die erfindungsgemäße Abtrennung der Triggerschaltung, sondern auch die Anforderungen an die Trennstrecke zwischen den Hauptelektroden der Funkenstrecke. Die Luft- und Kriechstrecken der Funkenstrecken werden hierzu so ausgelegt, dass unter Berücksichtigung des Verschleißes und der Verschmutzungen während des vorgesehenen Betriebs und somit nicht nur im Neuzustand sondern auch am Ende der Lebensdauer die passive Ansprechspannung der Funkenstrecke oberhalb dieser Spannungsfestigkeiten liegt. Diese Dimensionierung ist für Überspannungsschutzgeräte nicht üblich. Sie orientiert sich an der bekannten Auslegung von Schaltgeräten oder Sicherungsunterteilen bzw. -haltern.

Die erfindungsgemäße Überspannungsschutzanordnung auf der Basis einer triggerbaren Funkenstrecke kann als Einzelfunkenstrecke aber auch erfindungsgemäß in Reihenschaltung mit einer weiteren Funkenstrecke oder Überspannungsschutzeinrichtung eingesetzt werden.

Die Abstimmung des Schmelzleiters und dessen Positionierung kann hierbei auf die Leistungsfähigkeit der Funkenstrecke selbst, auf die Leistungsfähigkeit der Reihenschaltung bzw. auch auf die Leistungsfähigkeit des in Reihe geschalteten Überspannungsschutzelementes ausgerichtet werden.

Bei der Reihenschaltung der erfindungsgemäßen triggerbaren Funkenstrecken mit Abtrenneinrichtung für die Triggerschaltung mit weiteren Überspannungsschutzeinrichtungen ergeben sich verschiedene Möglichkeiten der Aufgabenteilung für den Normbetrieb, die Bewertung einer Überlast und nach der Abtrennung. Die verschiedenen Möglichkeiten werden noch anhand von Ausführungsbeispielen für Reihenschaltungen näher erläutert.

In einer möglichen Ausführungsform kann beispielsweise ein weiteres Überspannungsschutzelement, wie ein Varistor oder eine Funkenstrecke vorgesehen sein, welches mit der Hörnerfunkenstrecke elektrisch in Reihe geschalten ist, wobei eine erste und eine zweite Abtrennvorrichtung ausgebildet ist, und die erste Abtrennvorrichtung in Verbindung mit dem weiteren Überspannungsschutzelement steht und beim Erreichen oder Überschreiten einer Grenzbelastung eine Einrichtung freigibt, welche die Reihenschaltung zwischen dem weiteren Überspannungsschutzelement und der Hörnerfunkenstrecke unterbricht.

Ebenso ist es möglich, dass die zweite Abtrennvorrichtung die Bewertungseinheit aufweist, wobei die Bewertungseinheit ein schalterartiges Abtrennelement auslöst oder steuert, derart, dass das Abtrennelement eine Position einnimmt, wobei mit dem Erreichen dieser Position die elektrische Verbindung zur Triggerelektrode unterbrochen wird.

Es ist weiterhin möglich, dass die Reihenschaltung einen kleinen Schutzpegel besitzt und eine Folgestromlöschung maßgeblich vom weiteren Überspannungsschutzelement übernommen wird sowie hierbei die Belastung der Hörnerfunkenstrecke weit unterhalb ihres maximalen Leistungsvermögens liegt, sowie die Abtrennung der Triggerschaltung als Folge der Überlastung des weiteren Überspannungsschutzelementes ausgelöst und im zum Zeitpunkt der Abtrennung über die Reihenschaltung bereits fließender Fehlerstrom über die Hörnerfunkenstrecke sicher gelöscht wird. Dies führt zu einer sicheren Netztrennung und einer nach Abtrennung der Triggerschaltung sich einstellenden Spannungsfestigkeit, die definiert ist durch die Hörnerfunkenstrecke, welche der Mindestspannungsfestigkeit am Einbauort entspricht.

Die Auslösung der Triggerschaltung durch den Schmelzleiter wird bevorzugt auf eine vom normalen Verhalten abweichende Belastung mit Netzfolgestrom ausgerichtet. Als Kriterien hierfür können das prinzipielle Auftreten von Folgestrom, welcher zumindest bis zum Laufbereich der Funkenstrecken bzw. bevorzugt in die Löschkammer einläuft oder zusätzlich auch das Überschreiten einer bestimmten Stromstärke bzw. der spezifischen Energie des Folgestromes gewählt werden.

Bei einer Reihenschaltung mit einem Varistor kann die Abstimmung im Hinblick auf das Auftreten von einem Folgestrom im Laufbereich der Funkenstrecke oder in der Löschkammer erfolgen. Varistoren können netzfrequente Folgeströme nur bis zu einer begrenzten Höhe und Zeitdauer führen. Das Auftreten von hohen Folgeströmen, zum Beispiel von mehreren zehn oder einhundert Ampere lässt auf ein fehlerhaftes Verhalten bzw. eine Überlastungsgefahr schließen.

Varistoren können jedoch sehr hohe Impulsströme geringer Energie (zum Beispiel 8/20 µs) und mittlere Impulsströme großer Energie (zum Beispiel 10/350 µs) mehrfach ableiten. Eine Aktivierung der Abtrenneinrichtung der Funkenstrecke wird bei diesen Belastungen nicht bewirkt.

In einer triggerbaren Funkenstrecke führen aber bereits kleine Impulsströme, welche noch deutlich unterhalb der Belastbarkeit von Varistoren liegen, zu einer Lichtbogenbildung, ebenso, wenn ein Netzfolgestrom auftritt.

Der eingesetzte Schmelzleiter in der Funkenstrecke ist in der Lage, geringfügige Belastungen von fehlerhaften Belastungen quasi unterscheiden zu können. Wird der Schmelzleiterdraht der direkten Lichtbogeneinwirkung auch bei Impulsbelastungen ausgesetzt, ist eine Unterscheidung über die Belastbarkeit einstellbar.

Die erfindungsgemäße Lehre zielt insbesondere auf das Abschalten der Triggereinrichtung infolge einer Folgestrombelastung. Selbstverständlich kann ausgestaltend die Triggerschaltung auch bei anderen Kriterien, die zum Beispiel auf Impulsbelastungen beruhen, abgetrennt werden.

Ausgehend von der erfindungsgemäß weitergebildeten Hörnerfunkenstrecke, die einen Zündbereich, einen Lichtbogenlaufbereich und eine Löschkammer, insbesondere eine Deionkammer aufweist, wurde festgestellt, dass das Laufverhalten des Lichtbogens sich bei Folgestrombelastung deutlich von einer Impulsbelastung unterscheidet. Dieses unterschiedliche Laufverhalten des Lichtbogens wird zum Auslösen des Abtrennelementes genutzt.

Die Erfindung soll nachstehend anhand eines Ausführungsbeispiels sowie unter Zuhilfenahme von Figuren näher erläutert werden.

Hierbei zeigen:
- Fig. 1: eine beispielhafte Anordnung mit Hörnerfunkenstrecke, Triggerschaltung, Lichtbogenlaufbereich und Lösch- bzw. Deionkammer nebst der erfindungsgemäßen Bewertungseinheit auf der Basis eines Schmelzleiters;
- Fig. 2a: eine Weiterbildung der in der Fig. 1 gezeigten Lösung mit einem Schmelzleiter im Einlaufbereich der Deionkammer sowie einem weiteren Schmelzleiter im Volumen oberhalb des Zündbereiches;
- Fig. 2b: einen Querschnitt einer Funkenstrecke ähnlich derjenigen nach Fig. 2a;
- Fig. 3a und b: Ansichten einer beispielhaften Ausführungsform mit Unterbrechung oder Isolation in einer der Hörnerelektroden und dort angeschlossenem Schmelzleiter;
- Fig. 4: eine prinzipielle Darstellung einer Hörnerfunkenstrecke mit Deionkammer und Löschblechen, wobei der Schmelzleiter direkt zwischen zwei benachbarten Löschblechen angeschlossen ist;
- Fig. 5: eine beispielhafte Darstellung einer Hörnerfunkenstrecke mit Draufsicht auf die Löschbleche einer Deionkammer und seitlich, den Löschblechen benachbart ausgeführtem Abtrennelement in Form eines federkraftvorgespannten Schiebers;
- Fig. 6: eine Anordnung einer Funkenstrecke mit Schmelzleiter und Abtrennvorrichtung, wobei ein mechanisch vorgespannter Schieber vorgesehen ist, der Schmelzleiter den vorgespannten Schieber fixiert und Einströmöffnungen oder Einströmkanäle für ein bei einer externen Lichtbogenbildung entstehendes Plasma ausgebildet sind, so dass das Plasma in den Bereich zwischen den Löschblechen gelangt;
- Fig. 7: eine Darstellung eines beispielhaften Löschbleches bzw. einer Deionplatte, welche Öffnungen aufweist, durch die der Schmelzleiter oder ein Hilfsschmelzleiter geführt ist, um die Lichtbogenbildung in der Kammer zu verbessern;
- Fig. 8: eine beispielhafte Darstellung einer Reihenschaltung von zwei nahezu identisch aufgebauten Hörnerfunkenstrecken mit jeweiliger Bewertungseinheit, wobei mit der Erfassung eines fehlerhaften Folgestromes das Abtrennelement bzw. eine Schalteinrichtung die jeweilige Triggerschaltung betätigen und diese abtrennt;
- Fig. 9: ein weiteres Beispiel einer Reihenschaltung von zwei Hörnerfunkenstrecken, wobei die jeweils vorgesehenen Bewertungseinheiten auf das Abtrennelement bzw. die Schalteinrichtung der ersten, linksseitig dargestellten Hörnerfunkenstrecke einwirken;
- Fig. 10: eine Reihenschaltung von zwei Hörnerfunkenstrecken mit einer gemeinsamen Bewertungseinheit, welche auf das jeweilige Abtrennelement zur Abtrennung der Triggerschaltung beider Hörnerfunkenstrecken einwirken;
- Fig. 11: eine Reihenschaltung einer Hörnerfunkenstrecke mit einem Varistor, der über eine eigene, z.B. thermische Abtrennvorrichtung verfügt;
- Fig. 12: eine Reihenschaltung einer Hörnerfunkenstrecke mit Bewertungseinheit und Abtrennelement zum Unterbrechen der Triggerschaltung, wobei bei Überlastung des Varistors das Abtrennelement aktivierbar ist;
- Fig. 13: eine Reihenschaltung einer Hörnerfunkenstrecke der erfindungsgemäßen Art mit einem Varistor, welcher eine unabhängig von der Hörnerfunkenstrecke wirkende Kurzschlusseinrichtung aufweist; und
- Fig. 14: eine Reihenschaltung der erfindungsgemäßen Hörnerfunkenstrecke mit einer Funkenstrecke auf der Basis eines von einer Hörnerfunkenstrecke abweichenden Funktionsprinzips, beispielsweise unter Nutzung einer Hartgasabgabe.

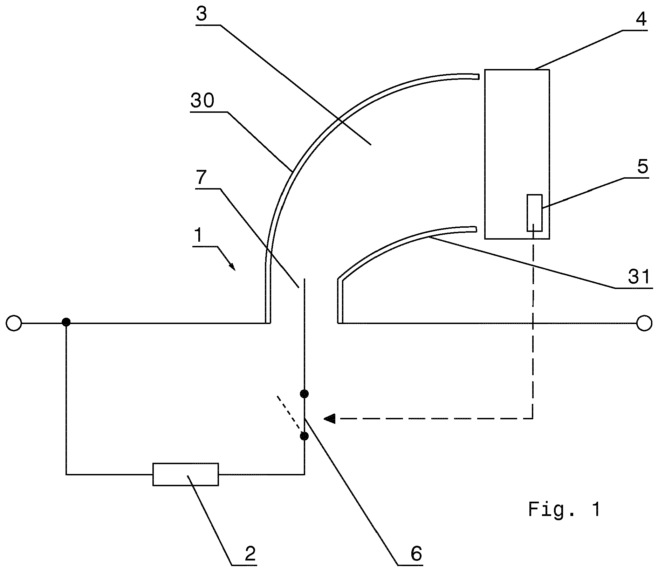

Die Überspannungsschutzanordnung gemäß Figur 1 geht aus von einer Funkenstrecke 1, welche eine Triggerschaltung 2 besitzt. Die Funkenstrecke weist zwei stilisiert dargestellte, bogenförmige Hörnerelektroden 30, 31 auf, die einen Lichtbogenlaufbereich 3 einschließen. Eine Zünd- oder Hilfselektrode 7 ist im Fußbereich der Hörnerelektroden 30; 31 befindlich und steht mit der Triggerschaltung 2 in Verbindung.

Ein Abtrennelement 6, zum Beispiel ausgebildet als Schalter, kann die Verbindung zwischen der Zündelektrode oder Hilfselektrode 7 und der Triggerschaltung 2 unterbrechen.

Dem Lichtbogenlaufbereich 3 schließt sich eine Deion- oder Löschkammer 4 an, die eine Vielzahl von Deion- oder Löschblechen aufnimmt (nicht gezeigt).

Im Bereich der Deionkammer 4 ist eine Bewertungseinheit 5 befindlich.

Diese Bewertungseinheit 5 besteht aus einem Schmelzleiter in Drahtform. Bei Überlastung des Schmelzleiters erfolgt symbolisiert über die Pfeildarstellung eine Aktivierung des Abtrennelementes bzw. Schalters 6 zur Unterbrechung der Triggerung.

Der in der Figur 1 nicht gezeigte Schmelzleiter als wesentliches Bestandteil der Bewertungseinheit 5 ist bevorzugt in der Deionkammer 4 der Funkenstrecke 1 angeordnet.

Die Funkenstrecke 1 ist dabei so ausgeführt, dass kurzzeitige Impulsströme nicht in die Deionkammer 4 einlaufen und das Einlaufen bei längeren Impulsströmen nur unter bestimmten Bedingungen bzw. stromabhängig möglich ist.

Folgeströme gelangen aufgrund der Unterstützung des Eigenmagnetfeldes beispielsweise durch Konzentratorbleche (nicht gezeigt) auch bei sehr kleinen Stromstärken von wenigen 10 A innerhalb weniger Millisekunden in die Deionkammer 4.

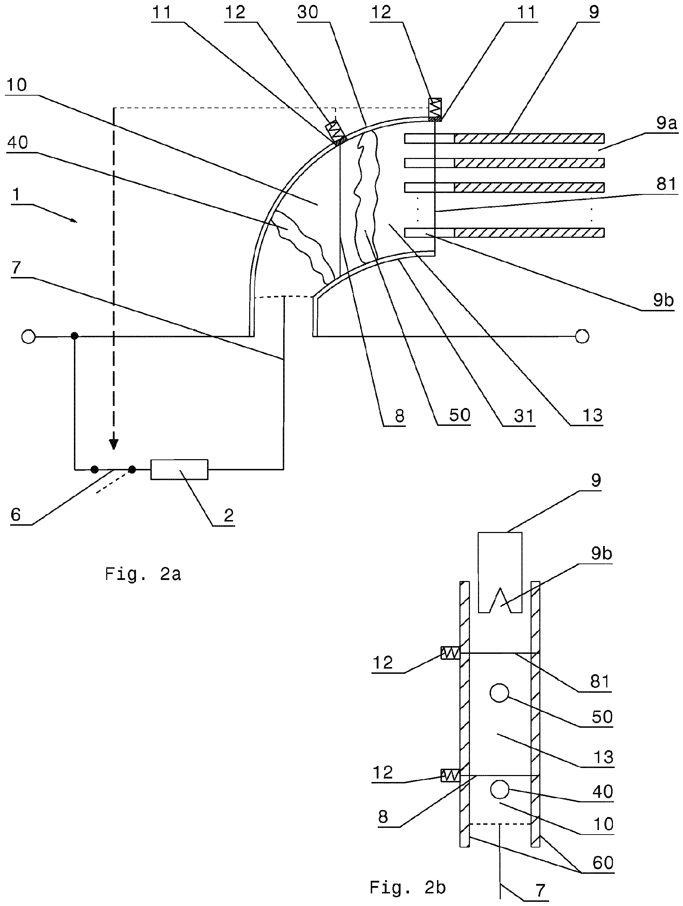

Die Figur 2 zeigt eine Ausbildung der Anordnung von Schmelzleitern 8; 81 auf der Basis des zur Figur 1 beschriebenen Prinzips.

Es wird demnach wiederum von einer Funkenstrecke 1 mit Hörnerelektroden 30; 31 ausgegangen, wobei zwischen einem elektrischen Außenanschluss und der Zündelektrode 7 die bereits erwähnte Triggerschaltung 2 vorhanden ist, die über eine Schalteinrichtung 6 abtrennbar ist.

Ein Schmelzleiter 81 als Auslösedraht ist innerhalb einer Deionkammer 4 (siehe Figur 1) befindlich, wobei die Deionkammer die Löschbleche 9 mit einem Einlaufbereich 9b und einem Austrittsbereich 9a umfasst.

Mit dem Bezugszeichen 10 ist das Volumen bezeichnet, welches üblicherweise Impulslichtbögen aufweist. Mit dem Bezugszeichen 13 ist der Lichtbogenlaufbereich des Folgestromlichtbogens angedeutet.

Die Elektroden 30 und 31 sind divergierend ausgeführt, wobei oberhalb des Zündbereiches sich das erwähnte Volumen 10 befindet, in welchem die Impulslichtbögen zu einer starken Ionisierung und thermischen Belastung der Funkenstrecke führen.

Wird der Schmelzleiter 8 in diesem Volumen platziert, ist eine Dimensionierung notwendig, welche bei mehreren Impulsströmen im Nennbereich nicht zu einer Auslösung führt. Die Auslösung soll erst dann bei Impulsströmen oberhalb des Nennbereiches bzw. durch Netzfolgeströme erfolgen. Der Schmelzleiter 8 ist beispielhaft gemäß Figur 2 zwischen den Laufschienen bzw. Hörnerelektroden 30; 31 der Funkenstrecke 1 gespannt und auf mindestens einer Seite mit einer Isolation 11 versehen. Die mechanische Vorspannung des Schmelzleiters bzw. Auslösedrahtes 8 erfolgt über eine Feder 12, die sich außerhalb des Lichtbogenbereiches befindet.

Die Auslösung des Schmelzleiters in diesem Bereich ist insbesondere bei energiearmen Impulsen, wie sie in Kombination mit Varistoren auftreten, möglich. Bei energiestarken Impulsströmen und betriebsbedingt auftretenden Netzfolgeströmen einer einfachen Funkenstrecke ist die Auslegung schwieriger, so dass gegebenenfalls zusätzliche Maßnahmen zum Schutz des Drahtes vorzusehen sind. Es wird daher der Positionierung des Schmelzleiters gemäß Bezugszeichen 81 der Vorzug gegeben.

An den Bereich 10 schließt sich zwischen den Hörnerelektroden 30; 31 der Bereich 13 innerhalb der Funkenstrecke 1 an. In diesen Bereich gelangen bei der Funkenstrecke nur solche Lichtbögen, die sich entlang der Laufschienen, das heißt der Elektroden bewegen. Entsprechend der vorangegangenen Ausführungen tritt ein Lichtbogen in dem Bereich 13 nur bei Netzfolgeströmen auf.

Mit dem Einlaufen des Lichtbogens im Bereich 9b wird der Schmelzleiter 81 vom Lichtbogen erfasst, wodurch dieser schmilzt und das Abtrennelement bzw. den Schalter 6 betätigt.

Ein Stromfluss durch den Schmelzleiter 81 kann die Überlastung desselben gezielt unterstützen, ist jedoch nicht zwingend erforderlich.

Die gezeigte Anordnung gemäß Figur 2a bzw. 2b kann auch bei Löschkammern in Form von Mäanderkammern oder Isolierstegkammern genutzt werden.

In den Figuren 2a und 2b ist beispielhaft die Lage eines Lichtbogens 40 im Bereich 10 und eines Lichtbogens 50 im Bereich 13 angedeutet.

Die Deionplatten 9 gemäß Figur 2b verfügen über einen Einlaufbereich 9b, welcher im Volumen 13 beginnt.

Der Schmelzdraht 81 ist hierbei in einer Laufschiene isoliert gehalten und von der Feder 12 vorgespannt.

Die Isolierung des Schmelzleiters 81 zur Laufschiene kann neben der Vermeidung eines Kurzschlusses auch die Funktion eines spannungsschaltenden Elementes übernehmen, so dass sich eine Sicherheitsfunktion ergibt. Übersteigt die anlegende Spannung beispielsweise den ausgewiesenen Schutzpegel des Ableiters, kann eine Abschaltung ausgelöst werden.

Alternativ besteht die Möglichkeit, den Schmelzleiter 8; 81 auch beidseitig gegenüber den Hörnerelektroden 30; 31 isoliert zu befestigen. Beim Einlaufen des Lichtbogens wird dieser der thermischen Wirkung desselben ausgesetzt. In Figur 2b ist beispielhaft der Draht 81 nur nahe des Einlaufbereiches 9b der Deionkammer zwischen den Laufschienen bzw. den Elektroden der Funkenstrecke 1 geführt.

Die Figur 2b zeigt einen Querschnitt der Hörnerfunkenstrecke mit den Bereichen 10 und 13 und den Löschblechen 9 der Deionkammer. Die Figur 2b zeigt hierbei eine Positionierung des Schmelzleiters 8 bzw. 81 quer zur Deionkammer mit seitlicher Anbindung bezogen auf die Begrenzungswände 60 des Lichtbogenlaufbereiches und mechanischer Vorspannung 12.

Gemäß den Erläuterungen zu den Figuren 2a und 2b wird der Schmelzleiter 8; 81 bzw. Teile davon stets dem Lichtbogen, zumindest jedoch dem Folgestromlichtbogen direkt ausgesetzt. Dies ist bei dem Ziel der Unterscheidung Folgestrom oder Impulsstrom unkritisch. Bei mehrfachen Folgestrombelastungen muss jedoch eine Alterung berücksichtigt werden. Es ist möglich, den Schmelzleiter so anzuordnen, dass die Überlastung im Wesentlichen nur durch den Stromfluss durch den Schmelzleiter und nicht durch die Lichtbogenwirkung erzielt wird.

Neben einer direkten Kontaktierung des Drahtes 81 im Laufbereich 13 oder im Einlaufbereich der Deionkammer kann auch eine Unterbrechung in der Laufschiene bzw. der Hörnerelektrode oder ein isoliert eingebrachter Kontakt genutzt werden, um einen Schmelzleiter erst bei Folgestrom und einer gewissen Laufstrecke zu belasten.

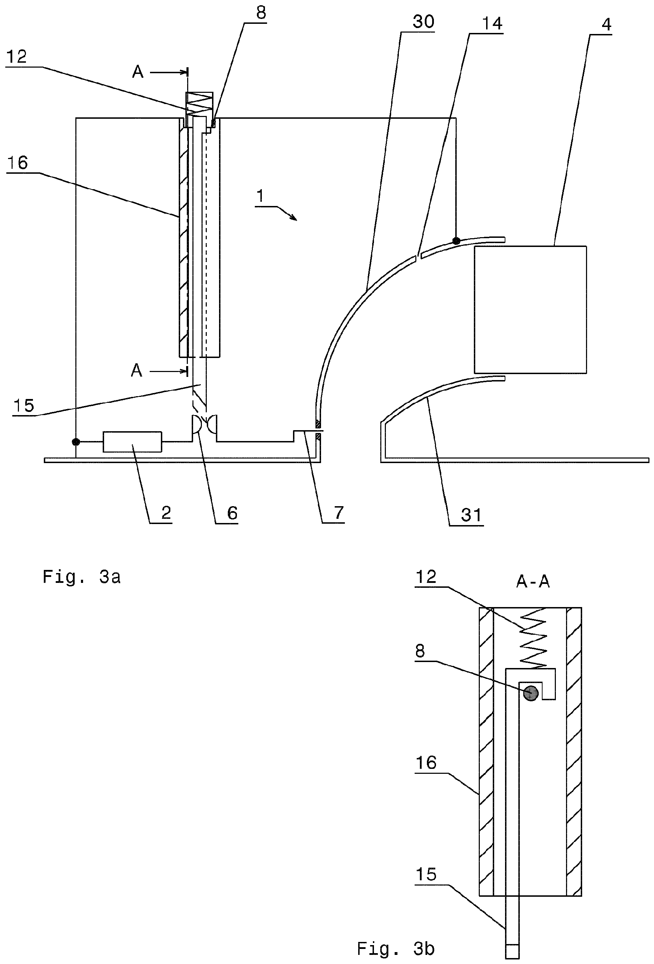

Eine derartige prinzipielle Anordnung zeigt die Figur 3a/3b beispielhaft.

In einer Hörnerelektrode 30 ist hierzu eine Unterbrechung 14 oder eine Isolation eingebracht. Es besteht aber auch die Möglichkeit, einen isolierten Kontakt an oder in der Hörnerelektrode vorzusehen. Der Bereich der Kontaktierung liegt oberhalb des Volumens 10 und somit im Bereich 13 (siehe Figur 2a) oder aber dicht neben der Deionkammer 4.

Im Bereich oder Volumen 13 ist der auftretende Folgestrom kaum reduziert, was von Vorteil ist.

Ein in der Figur 3a und 3b gezeigter Schieber 15 ist federvorgespannt am Schmelzleiter 8 fixiert und über eine Schlittenanordnung 16 geführt. Der Schieber 15 öffnet bei Auslösung den Schalter 6 und unterbricht die Triggereinrichtung 2 der Funkenstrecke 1.

Die Seitenansicht nach Figur 3b zeigt eine beispielhafte Fixierung des Schiebers 15 am Draht 8.

Die Betätigung des Schalters kann auch über einen ausgelösten Schlagbolzen oder dergleichen Mittel erfolgen. Auch kann der Schalter 6 verriegelt werden.

Seitlich neben der Deionkammer angeordnete Triggerschaltungen weisen den Vorteil eines geringen Platzbedarfes und einer geringeren Teileanzahl auf und erfordern keine Kraft- bzw. Wirkrichtungsumlenkung. Diesbezüglich muss der Schmelzleiter entsprechend geführt werden.

Gegebene ungünstige Belastungsverhältnisse des Schmelzleiters können durch die Möglichkeiten zur Einstellung des Auslöseverhaltens überwunden werden.

Bei einer Ausgestaltung kann der Schmelzleiter direkt mit Löschblechen innerhalb der Deionkammer 4 kontaktiert sein und mindestens zwei Löschbleche brücken, wodurch bei Kontakt des Lichtbogens mit den entsprechenden Löschblechen zumindest ein Teilstrom oder aber auch ein kompletter Strom über den Schmelzleiter fließt.

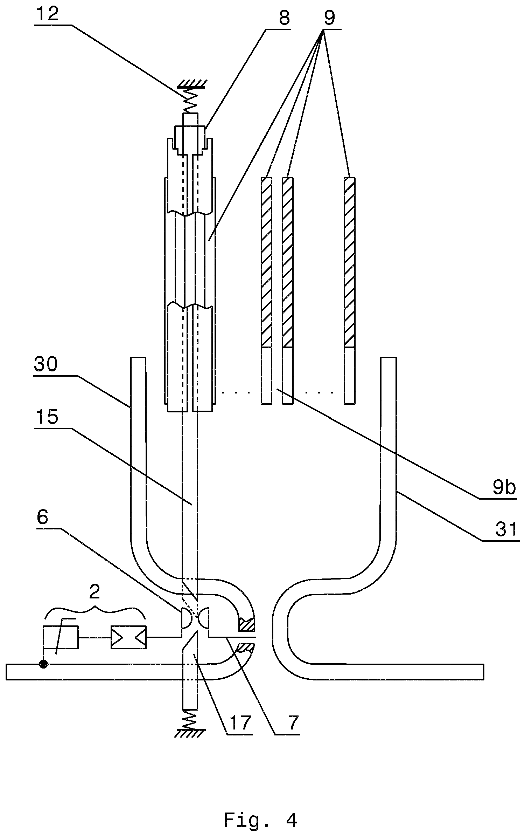

Eine diesbezügliche prinzipielle Grundanordnung ist in der Figur 4 dargestellt.

Die als Schalter ausgebildete Abtrennvorrichtung 6 der Triggerschaltung ist beispielsweise als Klemmkontakt ausführbar, der durch einen Schieber 15, der unter Federkraft 12 steht, beim Auslösen des Schmelzleiters 8 unterbrochen wird.

Der Schieber 15 besitzt hierbei eine hinreichende Vorspannung, um die Kontaktkraft der Kontakte des Schalters 6 zu überwinden.

Der Schieber 15 ist schlittenförmig geführt und fährt als Isolationsteil in den Kontaktbereich hinein, so dass die geforderte Mindestspannungsfestigkeit in dem Anwendungsumfeld neben der Funkenstrecke auch von dem offenen Schalter 6 der Triggerschaltung eingehalten wird.

Die Figur 4 zeigt auch einen weiteren Schieber 17, der zum Beispiel auf das Auslösekriterium Impulsbelastung oder die Belastung eines in Reihe geschalteten Bauteiles reagieren kann.

Dieser Schieber 17 kann die Triggerschaltung unabhängig von dem Zustand des Schmelzdrahtes 8 unterbrechen.

Der Schmelzdraht 8 kann auch neben einer Strombelastung auf eine thermische oder eine Druckbelastung reagieren, so dass verschiedene Kriterien der Belastung der Funkenstrecke oder eines in Reihe geschalteten Gerätes zur Abtrennung der Triggerschaltung herangezogen werden können.

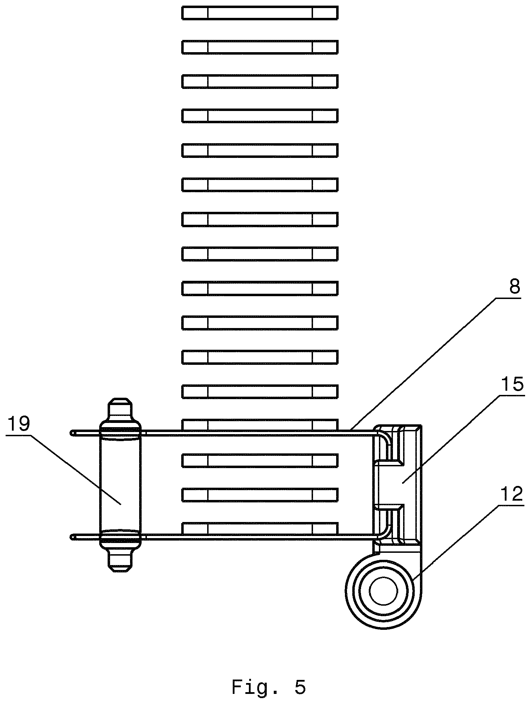

Die Figur 5 zeigt eine Darstellung einer beispielhaften seitlichen Befestigung eines Schiebers 15 am Schmelzleiter 8 und dessen Führung und Kontaktierung an den Deionplatten der Deionkammer.

Die Kontaktierung erfolgt im gezeigten Fall zwischen vier Platten, so dass bei Lichtbogenaufteilung in der Löschkammer der Schmelzleiter mit einer Spannung von ca. 60 V belastet wird, wodurch sich entsprechend dem Widerstand eine Strombelastung für den Schmelzleiter ergibt.

Der Gesamtstrom kann bei kleinen Werten komplett durch den Draht geführt werden, während bei hohen Stromstärken sich der Strom beim Einlaufen des Lichtbogens und nach der Aufteilung des Lichtbogens aufteilt. Die höchste Strombelastung für den Draht ergibt sich hierbei sehr kurzzeitig vor der Aufteilung in Teillichtbögen, da für diesen Vorgang eine gewisse Überhöhung der Lichtbogenspannung notwendig ist. Bei Isolierstegkammern bzw. Mäanderkammern ergibt sich diese kurzzeitige Überhöhung der Lichtbogenspannung selbstverständlich nicht und muss bei der Schmelzleiterauslegung nicht zusätzlich berücksichtigt werden.

Soll die gezeigte Anordnung für eine mehrfache Folgestrombelastung ausgelegt werden, darf der Schmelzdraht bei dieser Aufteilungsphase noch nicht überlastet werden, sondern beispielsweise erst bei langen Lichtbogenstandzeiten in der Löschkammer und der damit verbundenen Stromaufteilung auf den Schmelzleiter bzw. auch der Erwärmung der Löschbleche.

Bei einem Widerstand des Schmelzleiterdrahtes von ca. 100 mΩ erfolgt die Aufteilung des Stromes bereits deutlich unterhalb von 1 kA, wodurch das Löschvermögen der Deionkammer kaum beeinträchtigt wird.

Der Strom bzw. der Teilstrom bedingt dabei ein Schmelzen bzw. eine Verformung des Schmelzleiters, wodurch eine Auslösung des Schalters zur Abtrennung der Triggerschaltung möglich ist.

Neben einer direkten Kontaktierung der Lösch- oder Deionbleche sind auch Anordnungen möglich, bei denen der Schmelzleiter erst nach Erreichen von bestimmten Positionen des Lichtbogens in der Löschkammer belastet wird.

Hierzu ist eine Unterbrechung mindestens eines Löschbleches unterhalb der Kontaktierung möglich. Ebenso kann mindestens ein Schmelzleiterdrahtende quasi als Potentialsonde zwischen zwei Deionblechen eingebracht werden. Der Schmelzleiter kann zudem minimal gegenüber einem Deionblech isoliert sein.

Vorstehend geschilderte Varianten gestatten einen Stromfluss erst bei hinreichender Ionisierung oder direktem Kontakt in diesem Bereich. Eine derartige Ausführungsform ist insbesondere bei geringen Abständen zwischen Lichtbogenzündbereich und Deionblechen vorteilhaft, da so ein Stromfluss auch bei großen Impulsströmen, welche den Raum bis hin zu den Deionplatten bereits ionisieren können, vermieden werden kann.

Gemäß der Darstellung nach Figur 5 wird eine seitliche Führung des Schmelzleiters 8 bei entsprechender Kontaktierung an den Löschblechen bevorzugt, wobei aber auch eine axiale Wahl der Vorspannung grundsätzlich möglich ist.

Die seitlichen Führungen des Schmelzleiters nebst radialer Belastung ist insbesondere deshalb vorteilhaft, da in vielen Fällen die Triggerschaltung für die Funkenstrecke seitlich neben der Funkenstrecke angeordnet wird und sich damit in Wirkrichtung befindet.

Bei einer direkten Kontaktierung und damit Brückung von Löschblechen ist zu beachten, dass bei einem niedrigen Widerstand des Schmelzleiterdrahtes, insbesondere bei kleinen Strömen sich zwischen den gebrückten Löschblechen unter Umständen kein Lichtbogen ausbilden kann, da der Spannungsabfall über den Schmelzleiter zu gering ist. Der Schmelzleiter reduziert somit gegebenenfalls die Strombegrenzung. Aus diesem Grunde ist die Anzahl der gebrückten Löschbleche gering zu halten.

Wenn der Schmelzleiter zur Realisierung mechanischer Befestigungsfunktionen im Hinblick auf das federvorgespannte Abtrennelement, zum Beispiel ausgebildet als Schieber, teilweise außerhalb der Deionkammer geführt ist, muss beachtet werden, dass bei einer vollständigen Kommutierung des Stromes auf dem Schmelzleiter ein Lichtbogen außerhalb der Lichtbogenbrennkammer bzw. der Deionkammer entstehen kann, und zwar insbesondere im Bereich der mechanischen Belastung des Schmelzleiters.

Damit der Lichtbogen außerhalb der Lichtbogenkammer nicht zur Beschädigung oder Brückung der Kammer führt, können insbesondere bei Deionkammern zusätzliche Maßnahmen die Zündung von Teillichtbögen zwischen den gebrückten Blechen fördern. Hierfür können Gaskanäle aus dem Bereich der Schmelzleiterführung zwischen die Löschbleche geführt werden, so dass bei einer externen Lichtbogenbildung Plasma zwischen die Löschbleche gelangt.

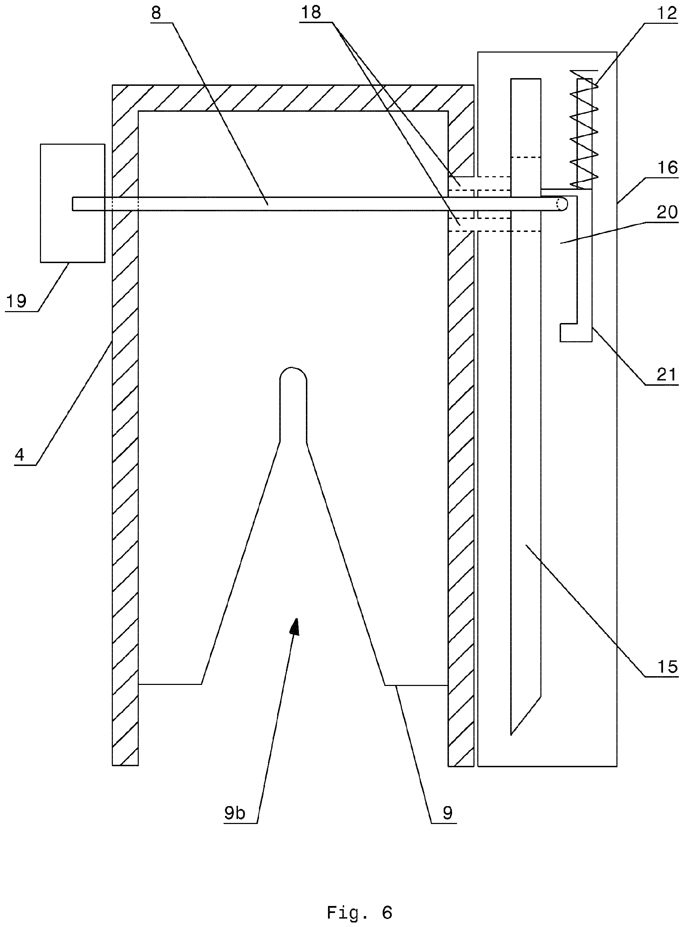

Eine derartige prinzipielle Ausführungsform zeigt die Figur 6.

Gemäß der dortigen Darstellung sind Eintrittsöffnungen oder Einströmkanäle 18 vorhanden. Im Bereich der mechanischen Fixierung des dort gezeigten Schiebers wird der Schmelzdraht 8 außerhalb der Deionkammer 4 mit einer Federkraft 12 radial zu seiner Führung belastet und am Führungsteil 19 fixiert. Dies führt bei einer nicht-adiabatischen Belastung gegebenenfalls zu einer mechanischen Dehnung, welche die Lichtbogenbildung in dem Bereich der Dehnung 20 bedingt. Der Bereich 20 kann durch ein Abdeckteil 21 abgeschottet werden, wodurch entstehendes Plasma durch die Öffnungen 18 zwischen die Deionplatten 9 geführt werden kann. Dies unterstützt die Lichtbogenbildung in diesem Bereich auch bei kleinen Strömen.

Weiterhin besteht die Möglichkeit, Teile des Schmelzleiterdrahtes 8 so zu gestalten und zwischen die Platten zu führen, dass eine Lichtbogenbildung direkt zwischen den Platten 9 erfolgt. Dies ist beispielsweise durch Engstellen am Schmelzleiter bzw. durch Öffnungen in Form von Bohrungen oder Schlitzen in den Deionplatten 9 möglich, durch welche der Schmelzleiterdraht oder ein weiterer Hilfsdraht 22, der nachträglich schmilzt, geführt wird.

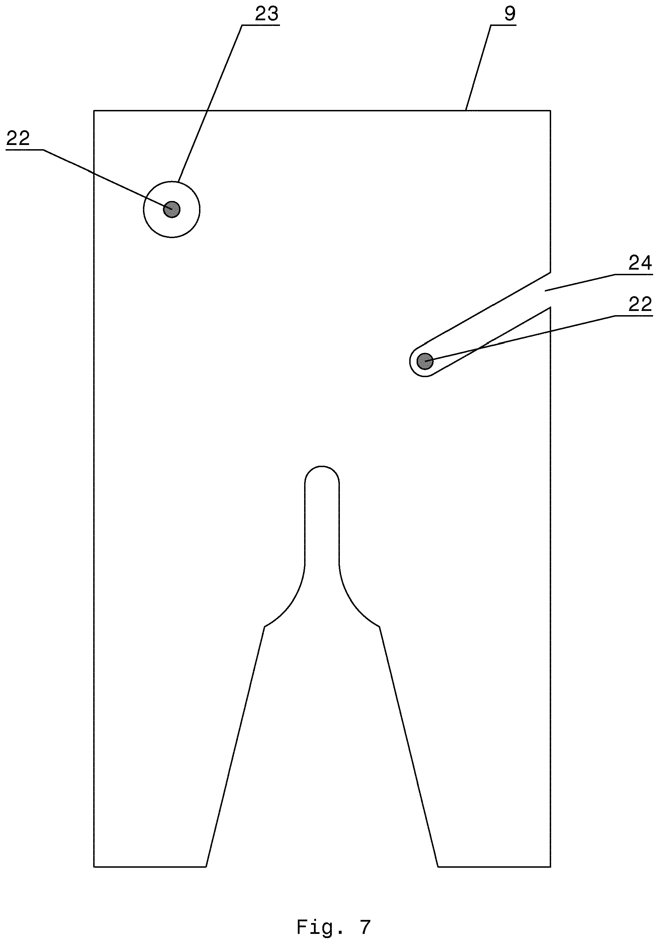

Eine derartige Weiterbildung der Erfindung zeigt die Figur 7 mit beispielhaften Öffnungen 23 und 24 in einem Deionblech 9.

Die Zündung eines Lichtbogens in der Deionkammer kann auch dadurch erfolgen, dass bei der Lichtbogenbildung am Schmelzdraht außerhalb der Lichtbogenkammer der Lichtbogen zwischen dem ersten kontaktierten Deionblech und einer relativ nahen Hörnerelektrode rückzündet und der Lichtbogen im Bereich der gebrückten Bleche erneut in die Kammer einläuft. Dies ist insbesondere bei der Brückung von Blechen an einem Rand der Kammer möglich, der hierdurch die Lichtbogenspannung bei der Rückzündung kaum oder nur sehr kurz abgesenkt wird.

Durch die Impedanz des Bypasses zumindest zu Teilbereichen der Lichtbogenkammer liegt neben einer Abstimmung der Stromaufteilung auch eine Spannungssteuerung vor, welche über die benötigte Lichtbogenspannung und den Spannungsabfall über der Impedanz erfolgt. Diese ist ebenso stromabhängig wie die Impedanzen selbst.

Die Ausführungen zur Abstimmung der Impedanz über das Drahtmaterial, die Kontaktierung und die Geometrie des Drahtes, das heißt des Schmelzleiters, sowie der Spannungsbelastung durch die Anzahl der gebrückten Bleche sind nur als beispielhafte Ausführungen zu betrachten. Selbstverständlich können hier auch unterstützend diskrete Bauteile mit linearem oder nicht-linearem Verhalten zur Höhe oder zeitlichen Steuerung der Belastung genutzt werden. Ebenso können spannungsbegrenzende bzw. spannungsschaltende Elemente zur Steuerung der Schmelzdrahtbelastung anstelle eines Spannungsabgriffes infolge der Brückung einer unterschiedlichen Anzahl von Löschblechen verwendet werden, ohne den Grundgedanken der Erfindung zu verändern.

Die Anordnung gemäß den Figuren 4 bis 7 sind insbesondere geeignet, das Netzstromverhalten bezüglich der Zeitdauer, Höhe aber auch der Schmelzintegrale zu bewerten. Diese Ausführungsformen sind daher für einzelne triggerbare Funkenstrecken aber auch für deren Reihenschaltung besonders geeignet.

Ist bereits das Auftreten eines Folgestromes relativ geringer Höhe als Fehlerkriterium hinreichend, sind Ausbildungen gemäß den Figuren 2 und 3 nutzbar.

Dies ist beispielsweise bei einer Anordnung aus Reihenschaltung Varistor mit triggerbarer Funkenstrecke der Fall. Hier kann das Einlaufen eines Netzfolgestromes in die Löschkammer, also die Unterscheidung zum Impulsstrom, bereits als hinreichendes Auslösekriterium genutzt werden, wodurch der I²t-Wert des Schmelzleiters sehr klein gehalten werden kann.

Soll bei einer Reihenschaltung von Funkenstrecken oder bei einer einzelnen Funkenstrecke eine Überlastungsgefahr detektiert werden, ist die Unterscheidung eines fehlerhaften Folgestromverhaltens von einem Folgestromverhalten bei normaler Funktion im zulässigen Betriebs- oder Leistungsbereich notwendig.

Die Funkenstrecke besitzt bezüglich ihres normalen Löschverhaltens bei Folgestrom ein maximal auftretendes Löschintegral, welches im Allgemeinen bei maximaler zulässiger Betriebsspannung und maximal zulässigem prospektivem Kurzschlussstrom des Netzes auftritt. Dieser bekannte Wert wird unter anderem zur Ausweisung der Selektivität zu einer minimalen Vorsicherung im Längszweig genutzt. Zwischen beiden Werten wird im Allgemeinen noch ein Sicherheitsfaktor berücksichtigt.

Besteht die Gefahr, dass der vorgenannte Wert erreicht oder sogar überschritten werden kann, besteht die Notwendigkeit, die Funkenstrecke abzutrennen. Die Belastung des Schmelzleiters wird daher so dimensioniert, dass bei Überschreitung des Strombegrenzungsintegrals des Ableiters eine Auslösung erfolgt.

Es ist darauf hinzuweisen, dass dieser Grenzwert nicht mit der Leistungsfähigkeit der Funkenstrecke gleichgesetzt werden darf. Die Funkenstrecke ist grundsätzlich in der Lage, diese und auch höhere Belastungen noch mehrfach sicher zu löschen. Beispielsweise werden die Löschbleche in der Deionkammer so dimensioniert, dass erst bei Integralen mit ca. dem zwei- bis dreifachen Wert die Temperatur der Bleche die Schmelztemperatur des angrenzenden Isolationsmaterials des Gehäuses bzw. anderer Tragkörper kurzzeitig erreicht.

Das gewünschte Auslöseverhalten des Schmelzleiters kann durch das Material im Sinne des Widerstandswertes des Querschnittes usw. beeinflusst werden. Bei hohem spezifischen Widerstand bzw. einer Widerstandserhöhung der Strombelastung ist es vorteilhaft, dass die Spannung, welche den Strom durch den Draht treibt, eine gewisse Höhe besitzt, damit der Strom nicht auf einen unkritischen Wert durch die Widerstandserhöhung bei positiven Temperaturgradienten reduziert werden kann.

Die Spannung zwischen zwei Deionblechen ist in gewissen Grenzen abhängig vom Material, dem Strom und der Kühlung. In einem ungünstigen Fall kann die Spannung unter 20 V sinken. Um unter solchen Umständen sicher eine Überlastung für die Schmelzleiter herbeizuführen, ist die Kontaktierung zwischen mehreren Deionblechen möglich, wodurch die treibende Spannung auf ein Vielfaches erhöht werden kann.

Es können jedoch auch Materialien mit geringer Temperaturabhängigkeit oder negativen Temperaturgradienten bezüglich des Widerstandswertes eingesetzt werden.

Der Schmelzleiterdraht selber kann bei Kontaktierung an die Bleche geklemmt, geschweißt oder gelötet werden.

Einzelne Kontaktierungen erlauben zusätzlich auch eine thermische Auslösung, welche mit der Gesamtbelastung der Funkenstrecke gekoppelt sein kann.

Eine solche thermische Auslösung kann mit einer Zustandsänderung des Schmelzleiters 6, zum Beispiel im Sinne einer Ausdehnung oder Verkürzung bewirkt werden.

Neben dem Einsatz von Schmelzleiterdrähten, welche durch Stromfluss überlastet werden bzw. thermisch auslösbar sind, können auch Materialien mit einer Formänderung genutzt werden. Materialien auf der Basis einer Formgedächtnislegierung können sowohl adiabatisch, zum Beispiel wie Drähte überlastet werden, besitzen jedoch den Vorteil, dass beispielsweise auch kleine Ströme bereits hinreichende Zugkräfte erzeugen können. Der Schmelzleiterdraht kann in axialer Richtung, aber auch in radialer Richtung mechanisch vorgespannt sein. Bei Drähten mit einem Durchmesser von ≤ 200 µm können Zugkräfte bis zu mehreren Newton dauerhaft gehalten werden, die zur Betätigung der Abtrennvorrichtung bzw. des Schalters nutzbar sind.

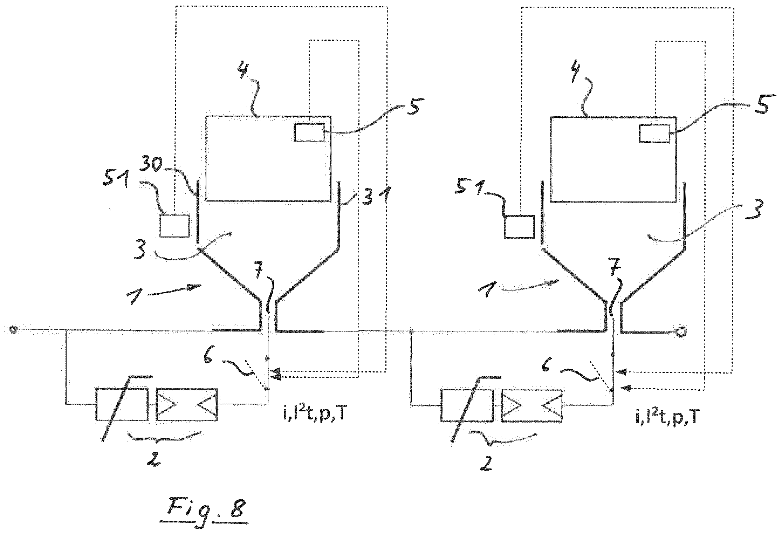

Bei den nachfolgend erläuterten Figuren 8 bis 14 werden, wenn nicht gesondert erläutert, dieselben Bezugszeichen für dieselben technischen Mittel und Elemente verwendet, wie sie bereits im Rahmen der Figuren 1 bis 7 zur Beschreibung herangezogen und eingeführt wurden.

Mit Hilfe der Figuren 8 bis 14 soll erläutert werden, wie unter Nutzung des erfindungsgemäßen Prinzips der Anwendung einer Bewertungseinheit zur Abtrennung einer Triggerschaltung die Reihenschaltung mit einem weiteren Ableiter umgesetzt werden kann. Dabei besteht grundsätzlich die Möglichkeit, dass bei Überlastung des weiteren Überspannungsschutzelementes der Reihenschaltung oder aber der triggerbaren Funkenstrecke mindestens die Triggerschaltung der Funkenstrecke deaktiviert wird.

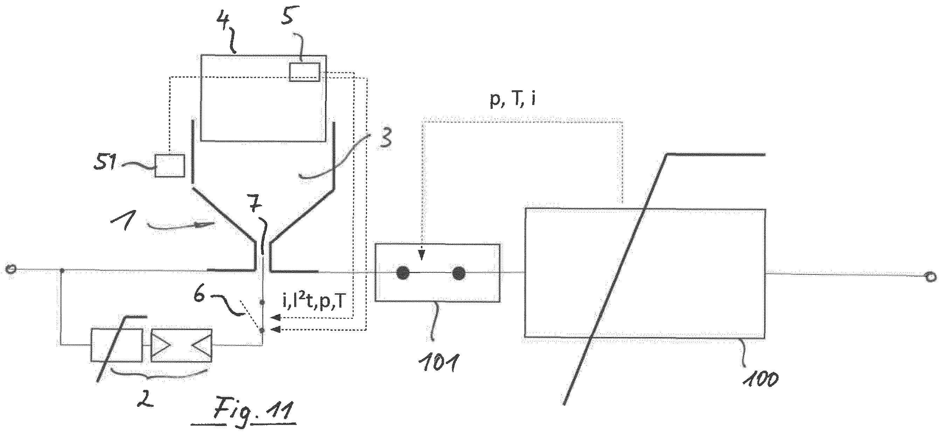

Reihenschaltungen einer triggerbaren Funkenstrecke mit einem weiteren Überspannungsschutzelement besitzen einen kleinen Schutzpegel, beispielsweise bei einer Netzspannung von 275 V ≤ 1,5 kV. Die notwendige Folgestromunterdrückung bzw. Folgestromlöschung wird bevorzugt ausschließlich bzw. überwiegend durch das weitere Überspannungsschutzelement realisiert. Die Belastung der triggerbaren Funkenstrecke liegt bei Normalfunktion der Reihenschaltung deutlich unterhalb ihres Leistungsvermögens. Die Reihenschaltungen entsprechend der Ausführungsformen nach Figur 11-14 entsprechen weitestgehend dieser "einseitigen" Aufgabenverteilung bei der Folgestromunterdrückung.

Eine Abtrennung der Triggerschaltung erfolgt bei thermischer oder dynamischer Überlastung des weiteren Überspannungsschutzelementes, beispielsweise infolge Alterung oder temporärer Überspannungen oder aber auch bei einer von der Normalbelastung abweichenden Belastung.

Der Fehlerstrom, welcher gegebenenfalls zum Zeitpunkt der Abtrennung bereits über die Reihenschaltung fließt, wird unabhängig vom Zustand des weiteren Überspannungsschutzelementes sicher durch die nun nicht mehr triggerbare Funkenstrecke unterbrochen. Nach dieser quasi letztmaligen Unterbrechung ist die Anordnung mit hoher Mindestspannungsfestigkeit sicher vom Netz getrennt.

Nach dem Abtrennen der Triggerschaltung der Funkenstrecke besitzt die Funkenstrecke eine Spannungsfestigkeit, welche der Mindestfestigkeit entsprechend dem Einbauort, zum Beispiel 2,5; 4; 6 kV entspricht. Hierbei werden entsprechende Kriech- und Luftstrecken realisiert, welche unempfindlich gegen Verschmutzungen und Elektrodenabbrand sind.

Die Figur 8 hingegen zeigt die Reihenschaltung von zwei erfindungsgemäßen Hörnerfunkenstrecken mit schalterartigem Abtrennelement 6, Triggerschaltung 2, den Hörnerelektroden 30 und 31, der Triggerelektrode 7 sowie einer ersten Bewertungseinheit 50, die im Bereich einer Kammer 4 zur Lichtbogenlöschung angeordnet ist, sowie einer zweiten Bewertungseinheit 51, die auf energetische Abläufe im Lichtbogenlaufbereich anspricht.

Bei Erfassung eines fehlerhaften Folgestromes wird der Schalter 6 für die jeweilige Triggerung 2 betätigt und die Triggerschaltung 2 von der Triggerelektrode 7 abgetrennt. Die Bewertungseinheiten können denjenigen entsprechen wie zur Figur 2, 3 oder 4 bereits erläutert und sind bevorzugt derart ausgeführt, dass diese ausschließlich auf das Auftreten oder die Höhe bzw. die Energie eines Folgestromes ansprechen und damit den Folgestrom bewerten.

Das Abtrennelement 6 kann mit der Einschieber- aber auch der Zweischieberlösung wie bereits erläutert realisiert werden. Das Auslösen der Schieber bzw. des Abtrennelementes 6 kann im Sinne einer "und"-"oder" Verknüpfung auch druckabhängig, temperaturabhängig oder in Bezug auf ein Schmelzintegral erfolgen.

Eine Reihenschaltung von zwei gleichwertigen erfinderischen Funkenstrecken mit entsprechender Abtrennvorrichtung ist selbstverständlich möglich. Hierbei ergibt sich jedoch eine gleichmäßige Belastung der Funkenstrecken auch bei Folgestrom und eine gleichmäßige Alterung. Bei dem Erreichen der Belastungsgrenze einer Funkenstrecke spricht deren Bewertungseinheit 5 oder 51 an und realisiert die Abtrennung der Reihenschaltung. Eine Zwangsbetätigung der Abtrenneinrichtung der zweiten Funkenstrecke ist nicht vorgesehen. Die Anforderungen an die gewünschte Abtrennfunktion werden somit jeweils nur von der erstansprechenden Funkenstrecke getragen. Die Einsparung einer Bewertungseinheit und einer Abtrennvorrichtung ist bei einer Funkenstrecke einer solchen Reihenschaltung prinzipiell dadurch möglich, dass die eine Funkenstrecke bezüglich Folgestromverhalten bzw. Leistungsvermögen überdimensioniert wird. In diesem Fall benötigt nur die im Verhältnis zu ihrer Leistungsfähigkeit stärker belastete Funkenstrecke eine Bewertung und Abtrennung.

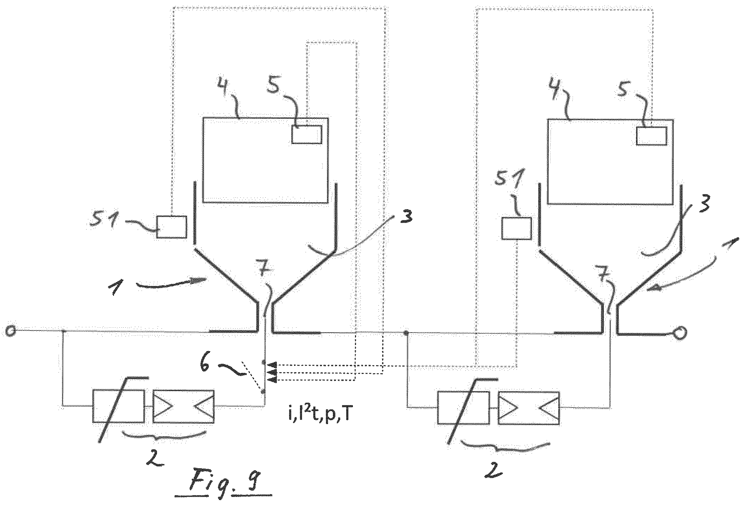

Figur 9 zeigt ebenfalls eine Reihenschaltung von zwei Hörnerfunkenstrecken 1, wobei hier die Bewertungseinheiten 5; 51 der zweiten Funkenstrecke (rechtsseitig gezeigt) auf das Abtrennelement 6 der Triggerschaltung 2 der ersten Funkenstrecke (linksseitig) einwirken.

Die Einwirkung der Bewertungseinheiten der zweiten Funkenstrecke ohne Abtrennvorrichtung auf die Abtrenneinrichtung der ersten Funkenstrecke erlaubt ebenfalls die Einsparung einer Abtrennvorrichtung und erfordert nicht die Überdimensionierung bzw. ein verändertes Folgestromverhalten der zweiten Funkenstrecke. Hierdurch kann eine gleichmäßige Beteiligung der Funkenstrecken an der Folgestromlöschung ermöglicht werden, wodurch die Leistungsfähigkeit der Anordnung bei Normalbetrieb erhöht werden kann. Eine zusätzliche Modifikation an Teilen der zweiten Funkenstrecke zur Veränderung der Leistungsfähigkeit kann hierbei entfallen.

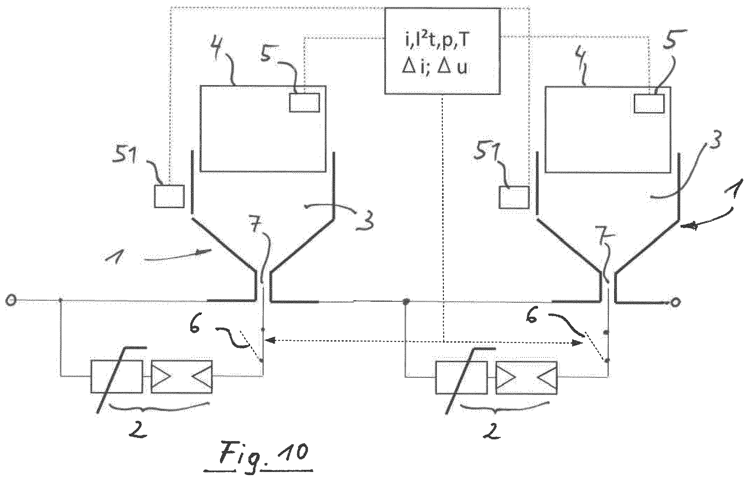

Die Figur 10 zeigt wiederum eine Reihenschaltung von zwei Hörnerfunkenstrecken 1 mit gemeinsamer Bewertungseinheit 5; 51, welche auf das jeweilige Abtrennelement 6 der jeweiligen Funkenstrecke 1 einwirkt.

Eine derartige Ausbildung ist insbesondere bei gleicher Arbeitsteilung der Funkenstrecken sinnvoll, das heißt für den Fall, dass beide Funkenstrecken gemeinsam den Folgestrom löschen und beide Funkenstrecken als Reihenschaltung die gewünschte Spannungs- oder Isolationsfestigkeit nach Abtrennung der Triggerungen sicherstellen.

Die zwangsweise Betätigung von beiden Abtrenneinrichtungen der beiden Funkenstrecken der Reihenschaltung ermöglicht nicht nur eine Aufteilung der Belastung bei der Folgestromabschaltung auf die Funkenstrecken, sondern auch eine Aufteilung der Anforderung bzw. der geforderten Spannungsfestigkeit bei den Abtrennvorrichtung und der Dimensionierung der "passiven" Funkenstrecken.

Bei einer derartigen Anordnung kann beispielsweise auch eine sogenannte Brückenschaltung zur Ableitung des Ansteuerkriteriums genutzt werden, welche eine längere Schieflast zwischen dem gewünschten anteiligen Spannungsaufbau der Einzelfunkenstrecke zur Folgestromlöschung ermittelt. Hierfür kann die gewünschte Strom- oder Spannungsverteilung auch durch entsprechende Sensoren direkt gesteuert werden.

Neben der direkten Nutzung von derartigen Abweichungen können auch elektronische Erfassungseinheiten zur indirekten Nutzung eingesetzt werden. Beispielhafte Brückenschaltungen zur Bewertung von in Reihe geschalteten Überspannungsableitern sind dem Fachmann bekannt und können für die entsprechende Anwendung ohne Weiteres adaptiert werden.

Figur 11 zeigt eine Reihenschaltung einer Hörnerfunkenstrecke 1 mit einem Varistor 100, welcher beispielsweise eine thermische Abtrennvorrichtung 101 aufweist.

Bei dieser einfachen Reihenschaltung können bereits sehr kleine Folgeströme zur Aktivierung der Abtrennvorrichtung der Funkenstrecke genutzt werden, wodurch die Anforderungen an die Bewertungseinheit/en 5 bzw. 51 recht gering sind. Bei einer Schädigung, Überlastung oder Zerstörung des Varistors, welche zu einem "unmittelbaren" Folgestrom führen, ist die Aktivierung der Abtrennvorrichtung der Funkenstrecke daher gewährleistet. Einfache thermische Abtrennvorrichtungen besitzen jedoch auch Nachteile, welche bei dieser einfachen Reihenschaltung beachtet werden müssen. Die Verzögerung einer thermischen Abtrennvorrichtung ist zum Teil erheblich. Bei Belastungen, welche den Varistor stark erwärmen, jedoch nicht unmittelbar zu einem erhöhten Folgestrom führen, kann die thermische Abtrennvorrichtung 101 ausgelöst werden, ohne dass die Abtrenneinrichtung 6 der Triggerschaltung aufgrund des nicht aufgetretenen Folgestromes betätigt werden konnte. Damit die Reihenschaltung auch in einem solchen Fall die Anforderung bzgl. der gewünschten hohen Spannungsfestigkeit besitzt, muss die Abtrennvorrichtung 101 des Varistors so ausgelegt sein, dass diese zumindest ohne Lichtbogenbildung beim Öffnen diese Anforderungen erfüllen kann. Hierzu sind entsprechende Luft- und Kriechstrecken vorzusehen. Diese Anforderungen können mit entsprechend langen Hubwegen oder auch mit Trennschiebern realisiert werden. Bei Verwendung von Lotstellen ist die Bildung von Lotfahnen etc. zu vermeiden oder zu berücksichtigen.

Aufgrund des ggf. erheblichen Zusatzaufwandes bzw. Platzbedarfes für eine solche spezielle Abtrennvorrichtung kann es daher vorteilhaft sein, eine unabhängige Abtrennvorrichtung des Varistors gänzlich zu vermeiden.

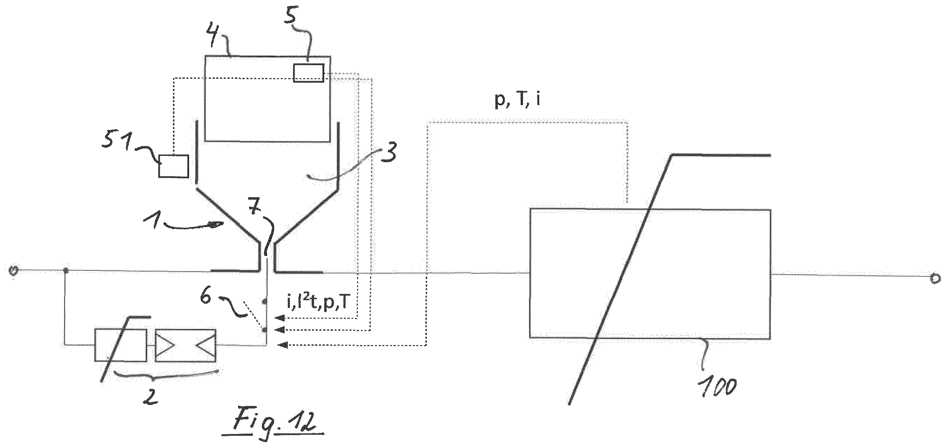

Figur 12 zeigt eine Reihenschaltung einer Hörnerfunkenstrecke 1 mit einem Varistor 100, wobei verschiedene Überlastkriterien nicht auf eine Varistor-spezifische, separate Abtrennvorrichtung einwirken, sondern unmittelbar das Abtrennelement 6 betätigen, was beispielsweise gemäß dem bereits geschilderten Ausführungsbeispiel über einen Schieber möglich ist.

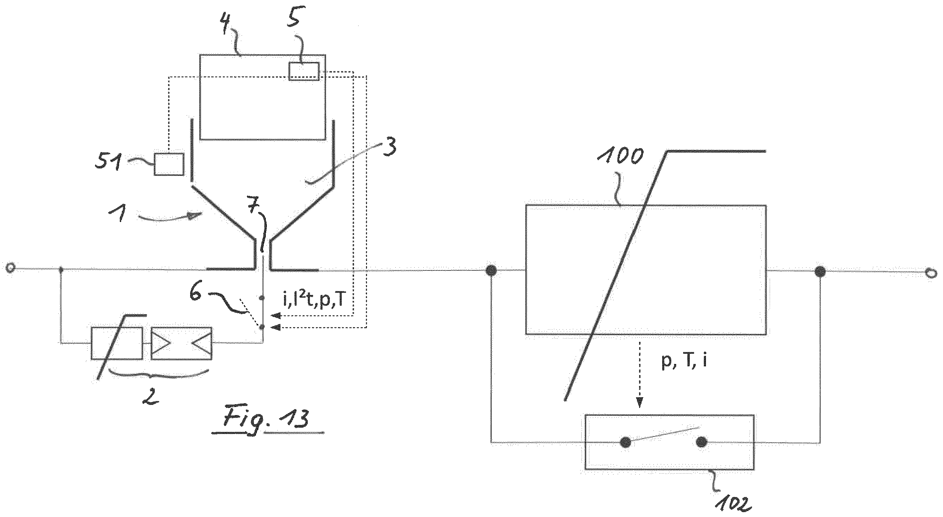

Figur 13 bezieht sich auf eine Reihenschaltung einer Hörnerfunkenstrecke 1 mit einem Varistor 100, welcher eine unabhängig von der Funkenstrecke 1 wirkende Kurzschlusseinrichtung 102 besitzt.

Diese Anordnung bedingt einen definierten Kurzschlussstrom bei Überlastung des Varistors 100, wodurch die Bewertung des fehlerhaften Folgestromes in der Hörnerfunkenstrecke 1 auch bei leistungsarmen Netzen sicher erfolgen kann.

Ebenso wird eine denkbare weitere Schädigung des Varistors 100 durch einen gegebenenfalls auftretenden Lichtbogen begrenzt. Die Kurzschlusseinrichtung 102 des Varistors 100 kann mit einer Impedanz behaftet sein, welche bei sehr leistungsstarken Netzen den Kurzschlussstrom reduziert ohne eine nennenswerte Begrenzung in Netzen mit kleinen prospektiven Kurzschlussströmen zu bewirken.

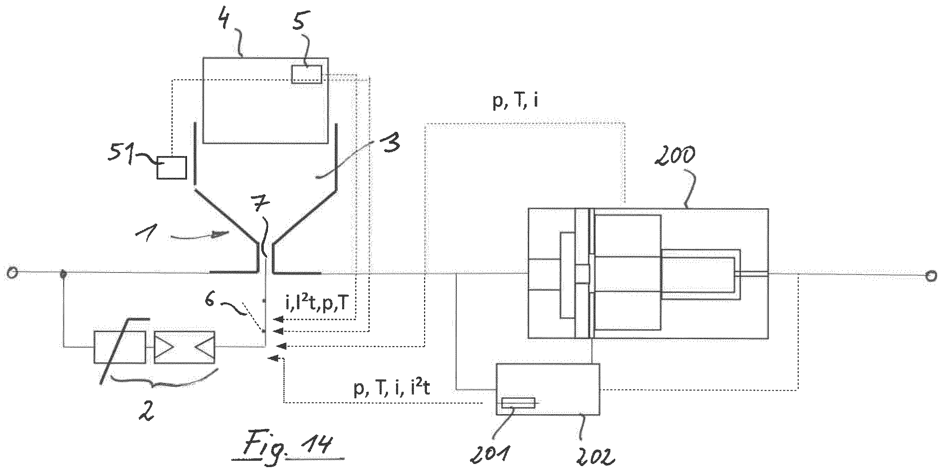

Figur 14 bezieht sich auf eine Reihenschaltung einer Hörnerfunkenstrecke 1 mit einer weiteren Funkenstrecke 200, welche auf einem anderen Funktionsprinzip basiert, beispielsweise dem Prinzip der Abgabe von Hartgas zur Unterdrückung des Lichtbogens.

Derartige Funkenstrecken 200 besitzen eine sehr starke Folgestrombegrenzung bzw. sind unter Nennbedingungen häufig oder gänzlich folgestromfrei.

Die Funktion gemäß Figur 14 ist ähnlich wie bei der gezeigten Reihenschaltung mit einem Varistor.

Die Hörnerfunkenstrecke 1 ist an der Löschung von Netzfolgeströmen im ordnungsgemäßen Zustand nicht oder nur wenig beteiligt.

Erst kurz vor dem Ende der Lebensdauer der in Reihe geschalteten Funkenstrecke 200 treten nennenswerte Folgeströme in der Funkenstrecke 1 auf, welche von der dortigen Bewertungseinheit 5; 51 erfasst und gegebenenfalls als Überlastströme bewertet werden können.

Das Abtrennelement zum Abtrennen der Triggerung 2 der Funkenstrecke 1 kann neben der eigenen Bewertungseinheit auch von Bewertungseinheiten der zweiten Funkenstrecke 200 alternativ angesteuert werden.

Ist die in Reihe geschaltete Funkenstrecke 200, wie in der Darstellung gezeigt, mit einer Triggerschaltung 202 versehen, besteht die Möglichkeit, eine Überlastanzeige dieser Triggerschaltung 202 zur Ansteuerung des Abtrennelementes 6 der Hörnerfunkenstrecke 1 zu nutzen. Hierfür kann beispielsweise ein Schlagbolzen einer Sicherung 201 der Triggerschaltung 202 der Funkenstrecke 200 direkt oder indirekt genutzt werden.

Bei der Reihenschaltung gemäß Figur 14 kann die Funkenstrecke 200 auch durch eine Triggerung aktiviert werden, welche unmittelbar mit der Triggerung 2 der Hörnerfunkenstrecke gekoppelt ist. Ebenso besteht die Möglichkeit, dass die Funkenstrecke 200 nur über eine stark vereinfachte Triggerschaltung verfügt oder sogar rein "passiv" ausgeführt ist. Diese Einzelfunkenstrecken zünden bereits bei geringen Überspannungen oder bereits bei Netzspannung. Solche vereinfachten Triggerschaltungen oder "passiv" zündenden Funkenstrecken verwenden i.A. Elemente aus leitfähigen oder halbleitenden Materialien, beispielsweise Polymere oder Keramiken und sind u.a. bei Reihenschaltungen aus dem Stand der Technik bekannt. Es ist jedoch wesentlich, dass eine solche "passiv" zündende Funkenstrecke 200 in der Reihenschaltung entsprechend Figur 14 keinen Beitrag zur Spannungsfestigkeit leisten kann und somit die erfindungsgemäße Funkenstrecke 1 sowohl bei dem Abtrennelement 6 der Triggerschaltung 2 und der Funkenstrecke 1 selbst allein die gewünschten Spannungs- und Isolationsfestigkeiten realisieren muss.

## Patentansprüche

1. Überspannungsschutzanordnung, umfassend eine in einem Gehäuse befindliche Hörnerfunkenstrecke (1) mit einer Kammer (4) zur Lichtbogenlöschung, wobei im Zündbereich der Hörnerfunkenstrecke (1) eine Triggerelektrode (7) befindlich ist,
**dadurch gekennzeichnet, dass**
ein Abtrennelement (6) vorgesehen ist, welches eine Verbindung einer Triggerschaltung (2) zur Triggerelektrode (7) unterbricht und somit die Triggerelektrode (7) abtrennt, wobei das Abtrennelement (6) von einer Bewertungseinheit (5; 51), welche einer Netzfolgestrom-bedingten Belastung unterliegt und auf diese reagiert, ausgelöst oder gesteuert wird.

2. Überspannungsschutzanordnung nach Anspruch 1,
**dadurch gekennzeichnet, dass**
die Triggerelektrode (7) über ein spannungsbegrenzendes oder spannungsschaltendes Element mit einer der Hauptelektroden (30) der Hörnerfunkenstrecke (1) in Verbindung steht und diese Verbindung mittels des Abtrennelementes (6) unterbrechbar ist.

3. Überspannungsschutzanordnung nach Anspruch 1 oder 2,
**dadurch gekennzeichnet, dass**
die Bewertungseinheit (5; 51) als Schmelzleiter (8; 81) ausgeführt ist.

4. Überspannungsschutzanordnung nach einem der vorhergehenden Ansprüche, **dadurch gekennzeichnet, dass**
die Bewertungseinheit (5) sich im Bereich der Kammer (4) zur Lichtbogenlöschung befindet oder mit dieser verbunden ist.

5. Überspannungsschutzanordnung nach einem der Ansprüche 1 bis 3,
**dadurch gekennzeichnet, dass**
die Bewertungseinheit (51) sich im Lichtbogenlaufbereich (13) des Folgelichtstrombogens in der Hörnerfunkenstrecke (1) befindet oder mit diesem verbunden ist.

6. Überspannungsschutzanordnung nach einem der vorhergehenden Ansprüche, **dadurch gekennzeichnet, dass**
mindestens ein weiteres Überspannungsschutzelement (1, 100, 200), wie ein Varistor oder eine Funkenstrecke vorgesehen ist, wobei dieses über unabhängig wirkende Schutzmaßnahmen zum Abtrennen (101, 201, 6) oder Kurzschließen (102) des Elements oder von Komponenten des Elements verfügen kann, und wobei diese weiteren Überspannungsschutzelemente (1, 100, 200) mit der Hörnerfunkenstrecke (1) elektrisch in Reihe geschalten sind.

7. Überspannungsschutzanordnung nach einem der vorhergehenden Ansprüche, **dadurch gekennzeichnet, dass**
mindestens ein weiteres Überspannungsschutzelement (1, 100, 200), wie ein Varistor oder eine Funkenstrecke vorgesehen ist, wobei dieses mit der Hörnerfunkenstrecke (1) elektrisch in Reihe geschaltet ist und über eine Einrichtung zur Bewertung der eigenen Belastung verfügt, welche auf das schalterartige Abtrennelement (6) der Triggerschaltung der ersten Hörnerfunkenstrecke (1) unabhängig von dessen Bewertungseinrichtung/en (5, 51) einwirken kann.

8. Überspannungsschutzanordnung nach einem der vorhergehenden Ansprüche, **dadurch gekennzeichnet, dass**
mindestens ein weiteres Überspannungsschutzelement (1) elektrisch in Reihe geschaltet ist, wobei diese Elemente der Reihenschaltung über jeweils mindestens eine Bewertungseinheit (5, 51), eine Triggerung (2) und ein schalterartiges Abtrennelement (6) verfügen, wobei die Abtrennelemente (6) der in Reihe geschalteten Überspannungsschutzelemente beim Ansprechen mindestens einer beliebigen Bewertungseinheit betätigt werden.

9. Überspannungsschutzanordnung nach einem der vorangegangenen Ansprüche, **dadurch gekennzeichnet, dass**
eine Abtrennvorrichtung einen Schmelzleiter (8; 81) aufweist, welcher im Bereich der Kammer (4) befindlich und dort einer netzfolgestrombedingten Belastung ausgesetzt ist, wobei der Schmelzleiter (8; 81) ein, bevorzugt federkraftunterstütztes, Abtrennelement (6) in einer ersten Position hält und dieses Abtrennelement (6) bei Schmelzen freigibt, derart, dass das Abtrennelement (6) eine zweite Position einnimmt, wobei mit dem Erreichen der zweiten Position die elektrische Verbindung zur Triggerelektrode (7) unterbrochen und somit die Triggerelektrode (7) abgetrennt wird.

10. Überspannungsschutzanordnung nach Anspruch 9,
**dadurch gekennzeichnet, dass**
der Schmelzleiter (8; 81) mit beabstandeten Löschblechen (9) der Kammer (4) kontaktiert ist.

11. Überspannungsschutzanordnung nach Anspruch 9 oder 10,
**dadurch gekennzeichnet, dass**
der Schmelzleiter (81) im Einlaufbereich (13) der Kammer (4; 9) angeordnet ist.

12. Überspannungsschutzanordnung nach einem der Ansprüche 9 oder 10, **dadurch gekennzeichnet, dass**
das Abtrennelement (6) von einem Schmelzleiter (8) auslösbar ist, welcher sich im oberhalb eines Zündbereiches der Hörnerfunkenstrecke (1) vorhandenen Volumen (10) befindet.

13. Überspannungsschutzanordnung nach einem der Ansprüche 9 bis 11, **dadurch gekennzeichnet, dass**
der Schmelzleiter (8) an einer der Laufschienen oder Hörnerelektroden (30; 31) der Funkenstrecke (1) angeschlossen ist.

14. Überspannungsschutzanordnung nach einem der Ansprüche 9 bis 13, **dadurch gekennzeichnet, dass**
ein Schieber (15) seitlich neben der Kammer (4) angeordnet ist, welcher das Abtrennelement (6) betätigt.

15. Überspannungsschutzanordnung nach einem der Ansprüche 9 bis 13, **dadurch gekennzeichnet, dass**
der Schieber (15) weitgehend innerhalb der Kammer (4) angeordnet ist.

16. Überspannungsschutzanordnung nach Anspruch 9,
**dadurch gekennzeichnet, dass**
der Schmelzleiter (81) potentialfrei im Einlaufbereich (9b) oder der Kammer (4) angeordnet ist.

17. Überspannungsschutzanordnung nach einem der Ansprüche 9 bis 16, **dadurch gekennzeichnet, dass**
der Schmelzleiter (8; 81) thermosensibel befestigt ist.

18. Überspannungsschutzanordnung nach Anspruch 10,
**dadurch gekennzeichnet, dass**
bei teilweiser Führung des Schmelzleiters (8) außerhalb der Kammer (4) zum Aktivieren des Abtrennelementes (6) Einströmöffnungen oder Einströmkanäle (18) für ein bei einer externen Lichtbogenbildung entstehendes Plasma ausgebildet sind.

## Claims

1. Over-voltage protection arrangement, comprising a horn spark gap (1), located in a housing, with a chamber (4) for arc quenching, a trigger electrode (7) being located in the ignition region of the horn spark gap (1), **characterised in that**
a disconnection element (6) is provided which interrupts a connection of a trigger circuit (2) to the trigger electrode (7) and thus disconnects the trigger electrode (7), the disconnection element (6) being tripped or controlled by an evaluation unit (5; 51) which is subject to and is reacting to a load due to a network follow-through current.

2. Over-voltage protection according to claim 1, **characterised in that**
a trigger electrode (7) is connected, via a voltagelimiting or voltage-switching element, to one of the primary electrodes (30) of the horn spark gap (1), and this connection can be interrupted by means of the disconnection element (6).

3. Over-voltage protection arrangement according to either claim 1 or claim 2,
**characterised in that**
the evaluation unit (5; 51) is configured as a fuse strip (8; 81).

4. Over-voltage protection arrangement according to any of the preceding claims,
**characterised in that**
the evaluation unit (5) is located in the region of or
connected to the chamber (4) for arc quenching.

5. Over-voltage protection arrangement according to any of claims 1 to 3,
**characterised in that**
the evaluation unit (51) is located in or connected to the arc travel region (13) of the follow-through arc in the horn spark gap (1).

6. Over-voltage protection arrangement according to any of the preceding claims,
**characterised in that**
at least one further over-voltage protection element (1, 100, 200) such as a varistor or a spark gap is provided and may have independently operating protective measures for disconnecting (101, 201, 6) or short-circuiting (102) the element or components of the element, these further overvoltage protection elements (1, 100, 200) being electrically connected in series with the horn spark gap (1) .

7. Over-voltage protection arrangement according to any of the preceding claims,
**characterised in that**
at least one further over-voltage protection element (1, 100, 200) such as a varistor or a spark gap is provided, is electrically connected in series with the horn spark gap (1) and has a device for evaluating its own load, which can act on the switch-like disconnection element (6) of the trigger switch of the first horn spark gap (1) independently of the evaluation device(s) (5, 51) of said element.

8. Over-voltage protection arrangement according to any of the preceding claims,
**characterised in that**
at least one further over-voltage protection element (1) is connected electrically in series, these elements of the series connection each having at least one evaluation unit (5, 51), a triggering system (2) and a switch-like disconnection element (6), the disconnection elements (6) of the over-voltage protection elements which are connected in series being actuated when any at least one evaluation unit is addressed.

9. Over-voltage protection arrangement according to any of the preceding claims,
**characterised in that**
a disconnection device has a fuse strip (8; 81), which is located in the region of the chamber (4) and exposed there to a load due to network follow-through current, the fuse strip (8; 81) holding a preferably spring-forceassisted disconnection element (6) in a first position and releasing said disconnection element (6) upon melting, in such a way that the disconnection element (6) takes on a second position, the electrical connection to the trigger electrode (7) being interrupted and the trigger electrode (7) thus being disconnected when the second position is reached.

10. Over-voltage protection arrangement according to claim 9, **characterised in that**
the fuse strip (8; 81) is contacted with spaced-apart metal extinguishing plates (9) of the chamber (4).

11. Over-voltage protection arrangement according to either claim 9 or claim 10,
**characterised in that**
the fuse strip (81) is arranged in the entry region (13) of the chamber (4; 9).

12. Over-voltage protection arrangement according to either claim 9 or claim 10,
**characterised in that**
the disconnection element (6) can be tripped by a fuse strip (8), which is located in the volume (10) present above an ignition region of the horn spark gap (1).

13. Over-voltage protection arrangement according to any of claims 9 to 11,
**characterised in that**
the fuse strip (8) is connected to one of the running rails or horn electrodes (30; 31) of the fuse strip (1).

14. Over-voltage protection arrangement according to any of claims 9 to 13,
**characterised in that**
a slide (15) which actuates the disconnection element (6) is arranged longitudinally alongside the chamber (4).

15. Over-voltage protection arrangement according to any of claims 9 to 13,
**characterised in that**
the slide (15) is arranged largely inside the chamber (4) .

16. Over-voltage protection arrangement according to claim 9, **characterised in that**
the fuse strip (81) is arranged isolated in the entry region (9b) or the chamber (4).

17. Over-voltage protection arrangement according to any of claims 9 to 16,
**characterised in that**
the fuse strip (8; 81) is fixed in a thermosensitive manner.

18. Over-voltage protection arrangement according to claim 10,
**characterised in that**,
when the fuse strip (8) is guided outside the chamber (4) in part to activate the disconnection element (6), inlet openings or inlet ducts (18) for a plasma which occurs during external arc formation are formed.

## Revendications

1. Agencement de protection contre les surtensions, comprenant un éclateur à cornes (1) qui est logé dans un boîtier et qui est pourvu d'une chambre (4) destinée à éteindre les arcs électriques, une électrode de déclenchement (7) se trouvant dans la zone d'allumage de l'éclateur à cornes (1),
**caractérisé en ce**
**qu'**il est pourvu d'un élément de coupe (6) qui vient interrompre une liaison entre un circuit de déclenchement (2) et l'électrode de déclenchement (7), effectuant ainsi la séparation de l'électrode de déclenchement (7), l'élément de coupe (6) étant mis en marche ou commandé par une unité d'analyse (5 ; 51) qui est soumise à une charge provoquée par le courant de suite du secteur et qui réagit à cette dernière.

2. Agencement de protection contre les surtensions selon la revendication 1,
**caractérisé en ce**
**que** l'électrode de déclenchement (7) est reliée, par l'intermédiaire d'un élément limitateur de tension ou commutateur de tension, à l'une des électrodes principales (30) de l'éclateur à cornes (1), cette liaison pouvant être interrompue au moyen de l'élément de coupe (6).

3. Agencement de protection contre les surtensions selon les revendications 1 ou 2,
**caractérisé en ce**
**que** l'unité d'analyse (5 ; 51) est réalisée sous forme d'un conducteur fusible (8 ; 81).

4. Agencement de protection contre les surtensions selon l'une des revendications précédentes,
**caractérisé en ce**
**que** l'unité d'analyse (5) se trouve au niveau de la chambre (4) destinée à éteindre l'arc électrique ou qu'elle est reliée à celle-ci.

5. Agencement de protection contre les surtensions selon l'une des revendications 1 à 3,
**caractérisé en ce**
**que** l'unité d'analyse (51) se trouve au niveau du parcours d'arc électrique (13) de l'arc électrique provoqué par le courant de suite au sein de l'éclateur à cornes (1) ou qu'elle est reliée à celui-ci.

6. Agencement de protection contre les surtensions selon l'une des revendications précédentes,
**caractérisé en ce**
**qu'**il est pourvu d'au moins un autre élément de protection contre les surtension (1, 100, 200), tel qu'une varistance ou un éclateur, lequel peut permettre d'avoir recours à des mesures de protection à effet indépendant destinées à séparer (101, 201, 6) ou courtcircuiter (102) ledit élément ou des composants dudit élément, ces autres éléments de protection contre les surtension (1, 100, 200) étant montés électriquement en série avec l'éclateur à cornes (1).

7. Agencement de protection contre les surtensions selon l'une des revendications précédentes,
**caractérisé en ce**
**qu'**il est pourvu d'au moins un autre élément de protection contre les surtensions (1, 100, 200), tel qu'une varistance ou un éclateur, qui est monté électriquement en série avec l'éclateur à cornes (1) et qui dispose d'un organe lequel permet d'analyser sa propre charge et lequel peut agir sur l'élément de coupe (6) de type interrupteur du circuit de déclenchement du premier éclateur à cornes (1), et ce de manière indépendante des organes d'analyse (5, 51) de ce dernier.

8. Agencement de protection contre les surtensions selon l'une des revendications précédentes,
**caractérisé en ce**
**qu'**au moins un autre élément de protection contre les surtension (1) est monté électriquement en série, lesdits éléments du montage en série comportant chacun au moins une unité d'analyse (5, 51), un dispositif de déclenchement (2) et un élément de coupe (6) de type interrupteur, les éléments de coupe (6) des éléments de protection contre les surtensions montés en série étant actionnés suite à la réaction d'au moins une quelconque unité d'analyse.

9. Agencement de protection contre les surtensions selon l'une des revendications précédentes,
**caractérisé en ce**
**qu'**un dispositif de coupe comporte un conducteur fusible (8 ; 81) qui se trouve au niveau de la chambre (4) et y subit une charge laquelle est fonction du courant de suite du secteur, le conducteur fusible (8 ; 81) retenant un élément de coupe (6), qui est préférentiellement sollicité par un ressort, dans une première position et libérant cet élément de coupe (6) lorsqu'il entre en fusion, faisant en sorte que l'élément de coupe (6) adopte une deuxième position, l'adoption de la deuxième position provoquant la rupture de la liaison électrique vers l'électrode de déclenchement (7) ce qui entraîne la séparation de l'électrode de déclenchement (7).

10. Agencement de protection contre les surtensions selon la revendication 9,
**caractérisé en ce**
**que** le conducteur fusible (8 ; 81) est en contact avec des tôles d'extinction (9), qui sont espacées, de la chambre (4).

11. Agencement de protection contre les surtensions selon les revendication 9 ou 10,
**caractérisé en ce**
**que** le conducteur fusible (81) est disposé dans la zone d'entrée (13) de la chambre (4; 9).

12. Agencement de protection contre les surtensions selon l'une des revendications 9 ou 10,
**caractérisé en ce**
**que** l'élément de coupe (6) peut être mis en marche par un conducteur fusible (8) qui se trouve dans le volume (10) prévu au-dessus d'une zone d'allumage de l'éclateur à cornes (1).

13. Agencement de protection contre les surtensions selon l'une des revendications 9 à 11,
que caractérisé en ce
le conducteur fusible (8) est raccordé à l'un des rails ou des électrodes à cornes (30 ; 31) de l'éclateur (1).

14. Agencement de protection contre les surtensions selon l'une des revendications 9 à 13,
**caractérisé en ce**
**qu'**un élément coulissant (15) est disposé latéralement à côté de la chambre (4) et actionne l'élément de coupe (6) .

15. Agencement de protection contre les surtensions selon l'une des revendications 9 à 13,
**caractérisé en ce**
**que** l'élément coulissant (15) est disposé essentiellement à l'intérieur de la chambre (4).

16. Agencement de protection contre les surtensions selon la revendication 9,
**caractérisé en ce**
**que** le conducteur fusible (81) est disposé dans la zone d'entrée (9b) ou au niveau de la chambre (4) de manière à ne présenter aucun potentiel.

17. Agencement de protection contre les surtensions selon l'une des revendications 9 à 16,
**caractérisé en ce**
**que** le conducteur fusible (8 ; 81) est fixé de manière thermosensible.

18. Agencement de protection contre les surtensions selon la revendication 10,
caractérisé en ce
des orifices d'entrée ou des canaux d'entrée (18) destinés à un plasma généré lors d'une survenue d'un arc électrique externe se forment lorsque le conducteur fusible (8) est guidé partiellement hors la chambre (4) afin d'activer l'élément de coupe (6).
